Europäisches Patentamt

European Patent Office

Office européen des brevets

(11) Publication number: **0 146 545**
**B1**

(12) EUROPEAN PATENT SPECIFICATION

(45) Date of publication of patent specification: **19.11.87**

(51) Int. Cl.⁴: **B 64 C 3/24**

(21) Application number: **83902343.9**

(22) Date of filing: **06.06.83**

(86) International application number:
**PCT/US83/00893**

(87) International publication number:
**WO 84/04905 20.12.84 Gazette 84/30**

(54) METHOD OF MAKING COMPOSITE AIRCRAFT WING.

(43) Date of publication of application:
**03.07.85 Bulletin 85/27**

(45) Publication of the grant of the patent:
**19.11.87 Bulletin 87/47**

(84) Designated Contracting States:
**DE FR GB NL**

(56) References cited:
**WO-A-83/01238**
**FR-A-2 502 111**
**GB-A-1 338 902**
**US-A-3 687 795**
**US-A-3 771 748**
**US-A-3 910 531**

(73) Proprietor: **The Boeing Company**
**P.O. Box 3707**
**Seattle Washington 98124 (US)**

(72) Inventor: **WHITENER, Philip, Charles**
**2624 Southwest 167th Place**
**Seattle, WA 98166 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

### Background of the invention

The high strength to weight ratio of composite components make the composites attractive for use on airplanes. However, the joints between composite components involve one of the most difficult problems of adapting the composites to the manufacture of airplanes. These problems are severely multiplied when the joints are highly stressed in several directions. It was found that a composite skin-spar joint could be prepared that not only lends itself to providing a low weight high strength joint for any composite, but it is particularly attractive for use in aircraft wings. The joint when integrated makes spars that carry the loads without the need for ribs.

### Summary of the invention

From WO 83/1238 a composite aircraft wing is known having an integral skin-spar joint that has a resin impregnated interwoven fabric with a pair of spaced apart spanwise extending panels, and a bisecting laterally extending interwoven panel that extends laterally to each side. Three cores are joined to one side of the laterally extending panel. The intermediate core extends between and is joined to the spaced apart panels, and has directional reinforcement to handle torsional loads. The other two cores have reinforcement to handle varying loads in a spanwise direction. A fourth core is located adjacent to the intermediate core and is joined to the three panels. It is the object of the invention to provide a method of making such a composite wing.

This is achieved by a method as described in claim 1.

### Description of the drawings

Figure 1 shows a crosssectional end view of the buildup of the composite wing of this invention mounted in a mold.

Figure 2 shows crosssectional end views of various stages of buildup of the wing of Figure 1.

Figure 3 shows a blowup of a fragmented section of the wing of Figure 1.

Figure 4 shows a fragmented view of a further blowup of Figure 3 showing more detail of the skin-spar joint of this invention.

Figures 5 and 6 are perspective views showing the layup of wing skins for this invention.

Figure 7 is a crosssectional view taken along lines 7—7 of Figure 6 and showing the covered mandrel in a mold and ready for curing.

Figure 8 is a blown up fragmented view of Figure 7.

Figures 9 and 10 are perspective views showing the layup of reinforced plastic on a mandrel for the cell liner of a wing.

Figure 11 is a crosssectional view taken along lines 11—11 of the mandrel of Figure 10.

Figure 12 shows a schematic plan view of the spars of the composite aircraft wing.

Figure 13 is a graph showing the wing bending moment for the wing of Figure 12.

Figure 14 shows a side elevational view of one of the chords, without a cover layer, making up a skin-spar joint.

Figure 15 is a crosssectional view taken along line 15—15 of Figue 14.

Figure 16 shows a crosssectional side elevational view of skin-spar joints in a wing of an aircraft.

### Detailed description

Composite skin-spar joint 10, is made up of resin impregnated interwoven fabric 12, cores 14, and 16, and chords 18a and 18b.

The interwoven fabric 12 is prepared from any of the known reinforcing fibers such as, but not limited to, fibreglass and graphite, and will be impregnated with any of the known resins, such as but not limited to, phenolic or epoxy resin. The impregnated fabric extends for the length of the desired span for the joint, is essentially H-shaped in cross section, and has fiber orientation that is predominately transverse. The fabric has a panel 20 that extends laterally and is bisected at 22a and 22b where it is interwoven with a pair of spaced apart panels 24a and 24b. The two spaced apart panels preferably have the spacing increase as the panels extend outward.

Core 14 is directly in contact with all three layers of the fabric, is located in the web area, and is preferably of a honeycomb material. A plastic potting compound 26 is preferably used between the core and panel 20.

On the opposite side of panel 20 and in contact with all the panels is an intermediate core 16; which is a fabricated core. It has a center 28 of honeycomb; which is aligned in a crisscrossing pattern to resist shear due to lateral bending, and an optional reinforced plastic top layer 30a and a bottom layer 30b. A covering 32 of a resin impregnated wound fiber may be used.

Chords 18a and 18b are located to the right and left of the intermediate core 16, and are fabricated chords. Those chords respectively have top layer 34a and 34b and bottom layer 36a and 36b; which are each made from reinforced plastics and are precured before assembly. There are honeycomb cores 38a and 38b between the layers and the cores have a wrapping 40a and 40b of resin impregnated reinforcing fibers. Various materials can be used to prepare the cores and the chords, however, the preferred material for the honeycomb is a glass fiber treated with a heat resistant phenolic resin, and the preferred reinforcement is graphite and the preferred resin is an epoxy. These chords are prepared in a manner to vary the load bearing capacity along the length of the span. Figures 14 and 15 show a build up of chord 18a. First, the bottom layer 36a is laid up using epoxy resin impregnated graphite fibers that are oriented in a zero direction or, in other words, in a spanwise direction. The thickness of the layer is varied to be the thickest at the point of greatest load 41; which is at the side of the body. Next, honeycomb 38a is placed on the bottom layer and secured there by setting up the resin in the layer.

When thus joined the honeycomb extends along the phantom line 42.

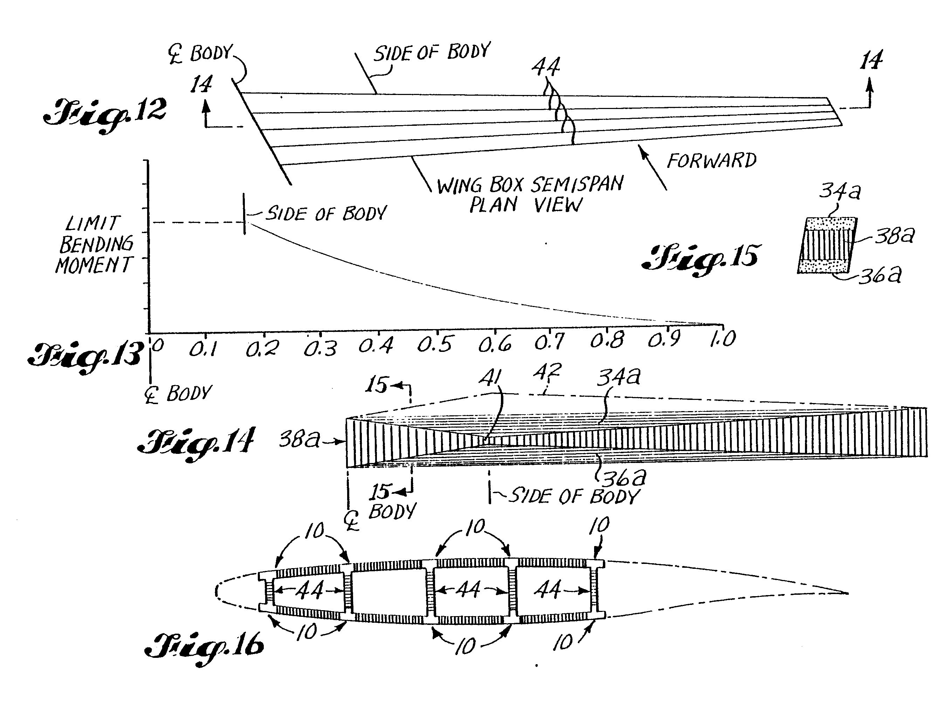

The honeycomb is then machined to shape. Next, a matching shaped top reinforced layer 34a is placed on top of the machined honeycomb, and the resin impregnated reinforcing fibers 40a, not shown in Figures 14 and 15, are wrapped around it to make up the chords having constant outside dimensions, but varying load bearing properties in the spanwise direction. It is desirable at a wing joint to redistribute the spar chords into the skin. This is accomplished by the bond between the spar chord and the skin. As the load is transferred the number of fibers in the chords are reduced until all the load is distributed into the skin at station 0 (Fig. 13).

Figure 16 shows the skin-spar joint for use in an airplane wing. In that figure joints 10 are used top and bottom in making up spars 44. Figure 12 shows a schematic plan view of the same wing with the five spars 44 extending to the centerline of the body of the airplane, and Figure 13 shows a graph of the bending moment for the wing of Figure 12.

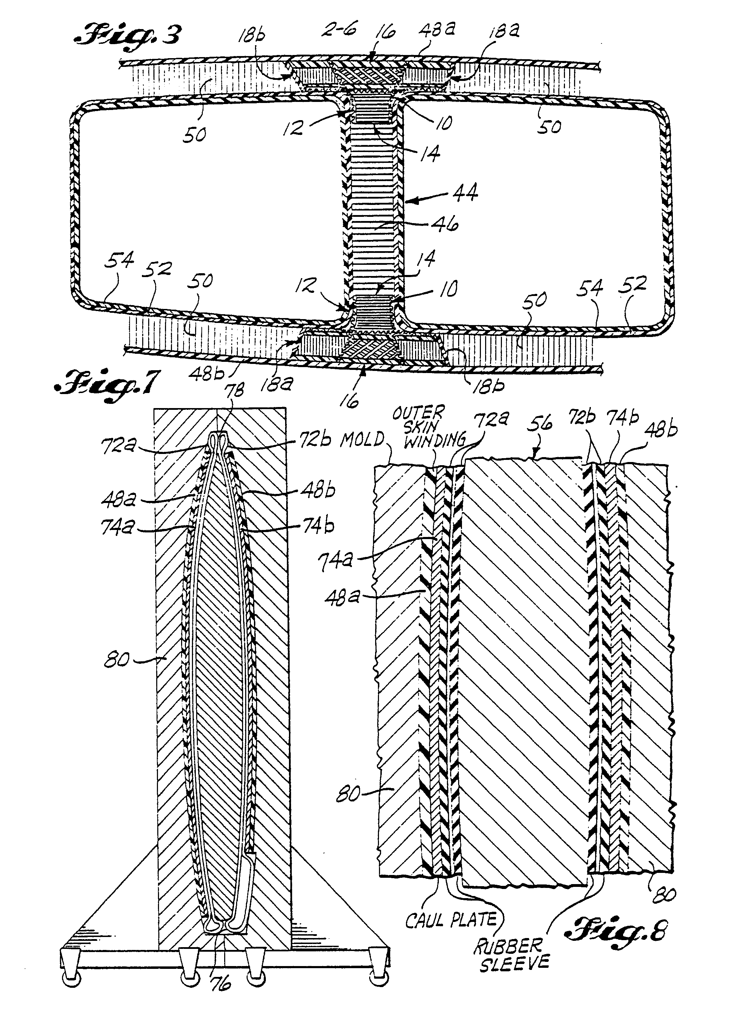

Figures 3 and 4 show the skin-spar joint 10 in a typical joint with a spar web core 46 of nonmetallic honeycomb, reinforced plastic wing face skins 48a and 48b, adjoining nonmetallic honeycomb core 50, and a cell of reinforced plastic 52 with a fuel resistant plastic liner 54. The wing skin may be of light weight metal, but a reinforced plastic wing skin is preferred.

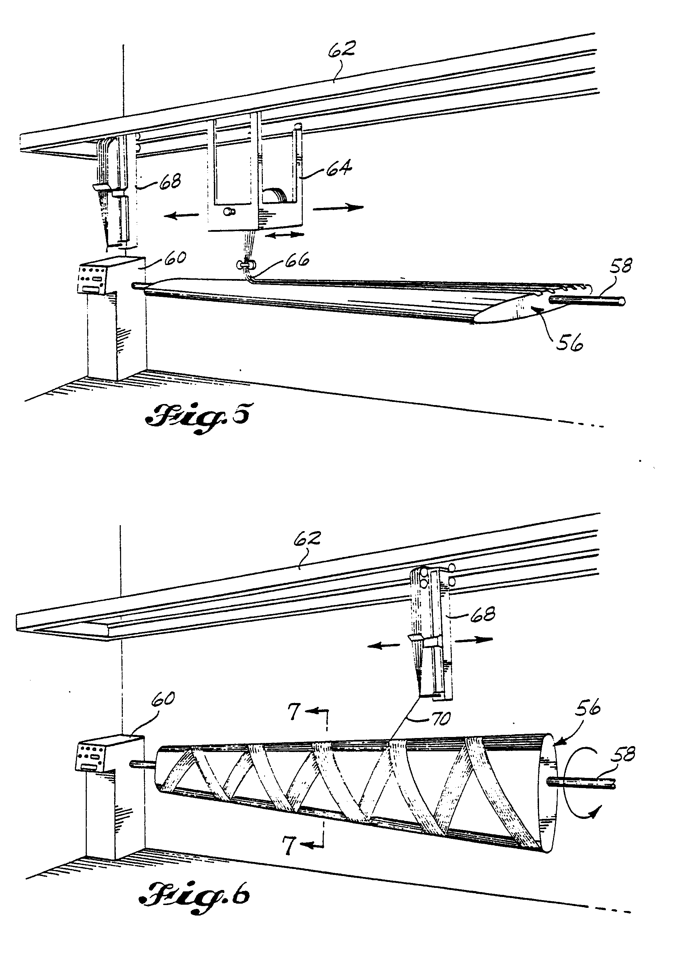

The reinforced plastic wing skin is preferably laid up as is shown in Figures 5 and 6 where a mandrel 56, mounted on shaft 58 is actuated by control unit 60. The fibers are laid up by use of overhead support 62 to which two types of movable dispensers are mounted. The first dispenser 64, is used to lay down resin impregnated nonmetallic reinforcing fibers arranged as a tape 66. These tapes are laid down essentially in a zero direction lengthwise of the mandrel. The second dispenser 68, is used to lay down resin impregnated nonmetallic reinforcing fibers 70, by winding around the mandrel. Each of the dispensers, as well as the mandrel, are programmed by the control unit 60 to give the desired layup for the wing skin.

The mandrel is covered by a pair of double sided air bags 72a and 72b; which in turn have a caul plate 74a and 74b secured to the outer surface of the bags. See Figures 7 and 8. These air bags and caul plates are secured to the mandrel before the fibers are wrapped. The wrapped fibers are cut near the leading edge 78, and the trailing edge 76 of the wing, and placed in a mould 80 along with the mandrel. Pneumatic pressure is then applied to the two air bags forcing the wing skins against the contoured mold, and the skin is formed at resin curing temperatures.

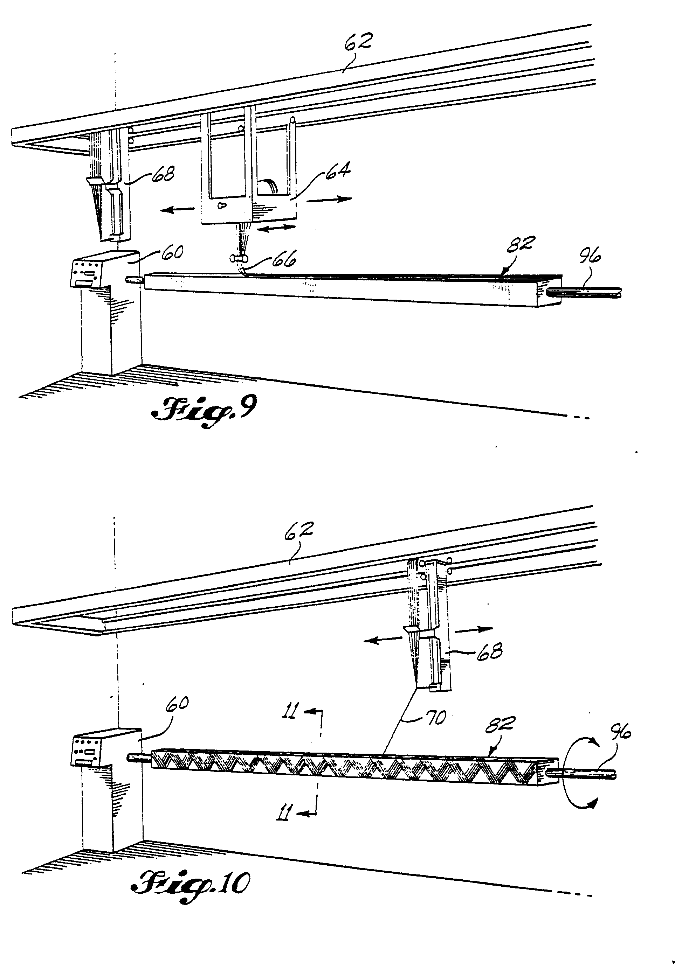

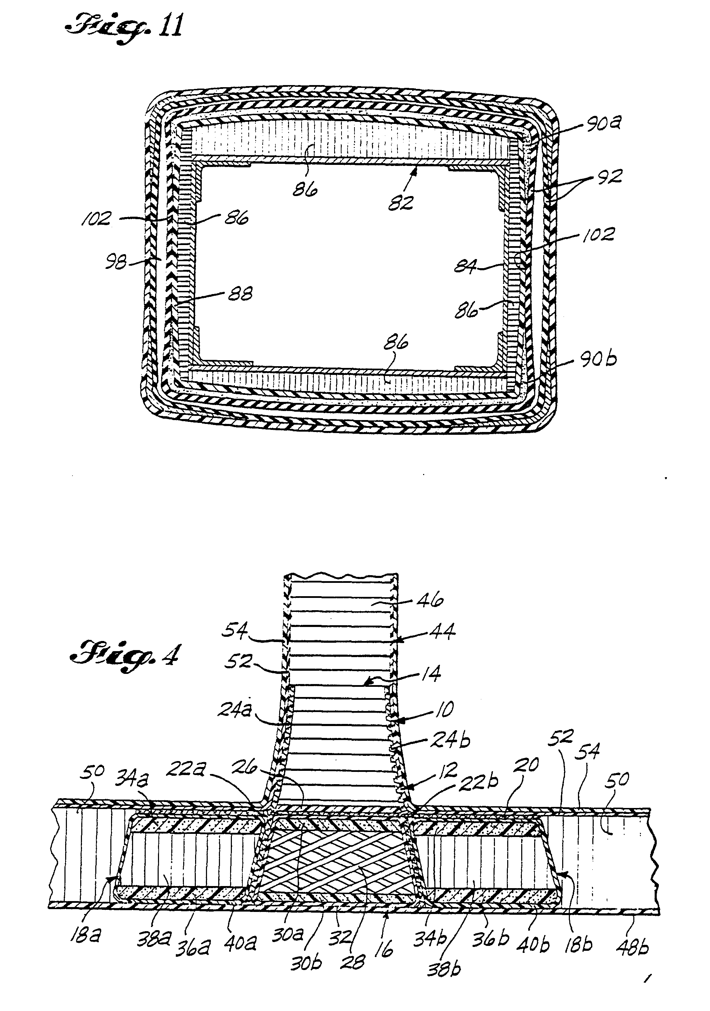

The cells are formed using a series of mandrels 82, each individually contoured. These mandrels, as are best shown in Figure 11, have a primary structure 84 of welded steel, a surrounding, secured and contoured honeycomb 86, a reinforced fiber layer 88, a shaped composite spacer 90 having two sections 90a and 90b, a double layered air bag 92, and a set of four shaped caul plates 94a, 94b, 94c and 94d arranged at the corners. The mandrel is mounted by shaft 96 to control unit 60, plastic liner 54 placed over the mandrel, and reinforced plastic covering 52 laid up with unidirectional layers of tape and wrapped layers of fibers using dispensers 64 and 68 and control unit 60, see Figures 9 and 10. Before laying up covering 52, pressure is introduced into the space 98 in the air bag 92. This pressure in combination with the wrapping by dispenser 68 controls the perimeter of tha layup.

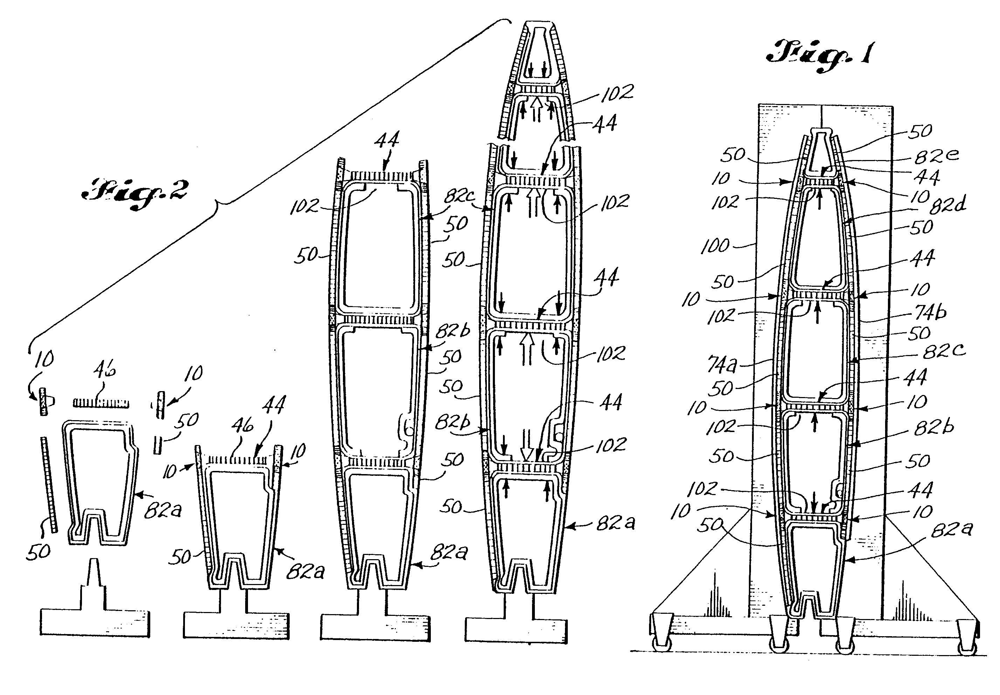

In preparing a composite wing the wrapped contoured mandrels 82, for the cells are aligned in a spaced apart arrangement one above the other with a honeycomb core 46 and a pair of skin-spar joints 10, making up a spar 44 arranged between the adjacent mandrels. Honeycomb cores 50 are located alongside each mandrel and between the skin-spar joints. The formed wing skins 74a and 74b are placed along each side, and the complete buildup located in a mold 100, where it is subjected to pressure in each of the mandrels to force the parts together and the skin against the mold. The formed buildup is then heated to resin cure temperatures, and the buildup is cured into a composite wing. In the construction of the mandrel the composite spacers 90a and 90b, see Figure 11, have gaps 102 at two ends; which provide a relief at each of those gaps. The relief eliminates load on the spar core 46, during buildup of the composite wing by shifting the loads to the more dense skin-spar joints 10. Each mandrel may differ as to providing relief. Preferably the mandrels are as shown in Figure 1 where the ends or top and bottom mandrels 82a and 82e do not have any provisions for relief, mandrel 82b provides relief at top and bottom, and mandrels 82c and 82d each have provided for relief on the top. The inflation pressure in the various mandrels is also preferably varied with the pressure higher on the side of the spar bracing a relief. Typical pressures are as follows:

| Mandrel No. | kPa | P.S.I. |
|---|---|---|
| 82a | 379,17 | (55,00) |
| 82b | 386,48 | (56,06) |
| 82c | 384,27 | (55,74) |
| 82d | 382,07 | (55,42) |
| 82e | 324,02 | (47,00) |

**Claims**

1. A method of preparing a composite aircraft wing with steps comprisng: wrapping resin impregnated nonmetallic reinforcing fibers (66, 70) around a plastic covering (54) on each of a series of individually contoured elongated mandrels (56), arranging the wrapped mandrels (56) in a line and in spaced relation to each other, locating a pair of reinforced load bearing joints (10) and a honeycomb core (46) at each spacing between wrapped mandrels (82), placing honeycomb core (50) between the load bearing joints along the sides of the wrapped mandrels (82), covering the sides with a preformed reinforced skin (74a, 74b), establishing the outside contour of the skin by placing the built up composite structure in a mold (100) and introducing pneumatic pressure around each mandrel forcing all parts together in the mold (100), and curing into a contoured composite structure.

2. A method of preparing a composite aircraft wing as in claim 1, with further steps comprising: introducing pneumatic pressure around the mandrels (56) during the wrapping of the mandrels (56).

3. A method or preparing a composite aircraft wing as in claim 2 with further steps comprising: wrapping the resin impregnated reinforcing fibers around the mandrel (56) by laying tape (66) longitudinally and winding fibers (70) around the plastic covering the mandrel (56), and continuously controlling the periphery of the wrapping by controlling the pneumatic pressure around each mandrel (56).

4. A method of preparing a composite aircraft wing as in claims 1—3 comprising: utilizing an air bag (72a, 72b) on each of a series of elongated contoured mandrels (56) and introducing pneumatic pressure into each air bag (72a, 72b).

5. A method of preparing a composite aircraft wing as in claim 4 with further steps comprising: laying up the resin impregnated material over the plastic liner (54) with longitudinally extending reinforced tape (52) and wrapping reinforcing filaments around the mandrel, and controlling the periphery of the lay up by controlling tension on the filaments and controlling pressure in the air bags (92) during the winding.

6. A method of preparing a composite aircraft wing as in claim 4, with further steps comprising: arranging the mandrels (82) in a vertical line for building up and for curing the composite, providing a relief (102) in at least one adjacent side in each of the intermediate mandrels for placing lay up pressure on the wing spar joint part (10) of each spar during lay up, providing higher pneumatic pressure to the air bags of the mandrels (82) on the side of a spar (44) bracing a relief.

7. A method of preparing a composite aircraft wing as in claim 5 with further steps comprising: locating caul plates (74a, 74b) between the air bags (72a, 72b) and the plastic liner at each corner of the mandrel (56) prior to laying up the resin impregnated reinforcing material.

8. A method of preparing a composite aircraft wing as in claim 1—7 with further steps comprising: cutting the laid up fibers along the leading and trailing edges of the wing shaped mandrel, introducing pneumatic pressure into air bags (72a, 72b) on the mandrel for pushing caul plates (74a, 74b) against the laid up fibers and forcing them against the mold surface, and curing to form upper and lower wing surfaces.

**Patentansprüche**

1. Verfahren zur Herstellung eines Verbundflugzeugflügels mit Schritten, die folgendes umfassen: Wickeln von harzimprägnierten, nichtmetallischen Verstärkungsfaser (66, 70) um eine Kunststoffabdeckung (54) auf jedem von einer Reihe von individuell konturierten langgestreckten Dornen (56), Anordnen der umwickelten Dorne (56) in einer Linie und in Abstandsbeziehung miteinander, Anordnen eines Paars von verstärkten lasttragenden Verbindungen (10) und eines Zellenkerns (46) in jedem Zwischenraum zwischen umwickelten Dornen (82), Anordnen eines Zellenkerns (50) zwischen den lasttragenden Verbindungen entlang den Seiten der umwickelten Dorne (82), Bedecken der Seiten mit einer vorgeformten verstärkten Haut (74a, 74b), Herstellen der außenseitigen Kontur der Haut durch Anordnen der aufgebauten Verbundstruktur in einer Form (100) und Einleiten von pneumatischem Druck um jeden Dorn, welcher alle Teile in der Form (10) aneinander drückt, und Härten zu einer konturierten Verbundstruktur.

2. Verfahren zur Herstellung eines Verbundflugzeugflügels nach Anspruch 1, dadurch gekennzeichnet, daß es weiter folgende Schritte umfaßt: Einführen von pneumatischem Druck um die Dorne (56) während des Umwickelns der Dorne (56).

3. Verfahren zur Herstellung eines Verbundflugzeugflügels nach Anspruch 2, dadurch gekennzeichnet, daß es weiter die folgenden Schritte umfaßt; Wickeln der harzimprägnierten, verstärkenden Fasern um den Dorn (56) durch Legen von Band (66) longitudinal und Wickeln von Fasern (70) um die Kunststoffabdeckung des Dorns (56) herum und kontinuierliches Steuern des Umfangs der Wicklung durch Steuern bzw. Regeln des pneumatischen Drucks um jeden Dorn (56).

4. Verfahren zur Herstellung eines Verbundflugzeugflügels nach den Ansprüchen 1 bis 3, dadurch gekennzeichnet, daß es folgendes umfaßt: Verwenden eines Luftsacks (72a, 72b) auf jedem von einer Reihe von langgestreckten konturierten Dornen (56) und Einführen von pneumatischem Druck in jeden Luftsack (72a, 72b).

5. Verfahren zur Herstellung eines Verbundflugzeugflügels nach Anspruch 4, dadurch gekennzeichnet, daß es weiter folgende Schritte umfaßt: Auflegen des harzimprägnierten Materials über die Kunststoffauskleidung (54) mit sich longitudinal erstreckendem, verstärktem Band (52) und Wickeln von verstärkenden Filamenten um den Dorn und Steuern des Umfangs der Auflage durch Steuern bzw. Regeln der Spannung auf den Filamenten und Steuern bzw. Regeln des Drucks in den Luftsäcken (92) während des Wickelns.

6. Verfahren zur Herstellung eines Verbundflugzeugflügels nach Anspruch 4, dadurch gekennzeichnet, daß es weiter folgende Schritte umfaßt: Anordnen der Dorne (82) in einer vertikalen Linie zum Aufbau und zum Härten des Verbunds, Vorsehen eines Reliefs (102) in wenigstens einer benachbarten Seite in jedem der zwischenliegenden Dorne zum Plazieren eines Auflagedrucks auf den Flugzeugholmverbindungsteil (10) von jedem Holm während des Auflegens, Vorsehen eines höheren pneumatischen Drucks zu den Luftsäkken der Dorne (82) auf der Seite eines Holms (44), der ein Relief versteift.

7. Verfahren zur Herstellung eines Verbundflugzeugflügels nach Anspruch 5, dadurch gekennzeichnet, daß es weiter folgende Schritte umfaßt: Anordnen von Zwischenplatten (74a, 74b) zwischen den Luftsäcken (72a, 72b) und der Kunststoffauskleidung an jeder Ecke des Dorns (56) vor dem Auflegen des harzimprägnierten, verstärkten Materials.

8. Verfahren zur Herstellung eines Verbundflugzeugflügels nach den Ansprüchen 1 bis 7, dadurch gekennzeichnet, daß es weiter die folgenden Schritte umfaßt: Schneiden der aufgelegten Fasern entlang der Profil- vorder- und -hinterkante des flügelförmigen Dorns, Einführen von pneumatischem Druck in die Luftsäcke (72a, 72b) auf dem Dorn zum Drücken der Zwischenplatten (74a, 74b) gegen die aufgelegten Fasern und zum Drücken derselben gegen die Formoberfläche und Härten, und eine obere und untere Flügeloberfläche auszubilden.

**Revendications**

1. Procédé de préparation d'une aile composite d'aéronef, ayant des étapes comprenant l'enroulement de fibres non métalliques de renforcement (66, 70) imprégnées de résine autour d'un recouvrement (54) de matière plastique formé sur chaque mandrin d'une série de mandrins allongés (56) ayant des profils déterminés individuellement, la disposition des mandrins enveloppés (56) sous forme alignée et à distance les uns des autres, la disposition de deux joints renforcés (10) destinés à encaisser les forces et d'une âme en nid d'abeilles (46) dans chaque espacement formé entre des mandrins enveloppés (82), la disposition d'une âme en nid d'abeilles (50) entre les joints d'encaissement de charge le long des côtés des mandrins enveloppés (82), le recouvrement des côtés avec un revêtement renforcé préalablement formé (74a, 74b), l'établissement du profil externe du revêtement par disposition de la structure composite construite dans un moule (100) et l'introduction d'une pression pneumatique autour de chaque mandrin, afin que tous les éléments soient repoussés les uns contre les autres dans le moule (100), et le durcissement sous forme d'une structure composite profilée.

2. Procédé de préparation d'une aile composite d'aéronef selon la revendication 1, ayant les étapes supplémentaires comprenant l'introduction d'une pression pneumatique autour des mandrins (56) pendant l'enveloppement des mandrins (56).

3. Procédé de préparation d'une aile composite d'aéronef selon la revendication 2, ayant des étapes supplémentaires comprenant l'enroulement de fibres de renforcement, imprégnées d'une résine, autour du mandrin (56) par disposition d'un ruban (66) en direction longitudinale et par enroulement de fibres (70) autour du recouvrement de matière plastique du mandrin (56), et le réglage continu de la périphérie de l'enroulement par réglage de la pression pneumatique appliquée autour de chaque mandrin (56).

4. Procédé de préparation d'une aile composite d'aéronef selon l'une quelconque des revendications 1 à 3, comprenant l'utilisation d'un sac pneumatique (72a, 72b) sur chacun d'une série de mandrins allongés profilés (56), et l'introduction d'une pression pneumatique dans chaque sac pneumatique (72a, 72b).

5. Procédé de préparation d'une aile composite d'aéronef selon la revendication 4, ayant des étapes supplémentaires comprenant la pose du matériau imprégné de résine sur le revêtement de matière plastique (54) avec un ruban renforcé longitudinalement (52) et l'enroulement de filaments de renforcement autour du mandrin, et le réglage de la périphérie ainsi disposée par réglage de la tension appliquée aux filaments et par réglage de la pression régnant dans les sacs pneumatiques (92) pendant l'enroulement.

6. Procédé de préparation d'une aile composite d'aéronef selon la revendication 4, ayant des étapes supplémentaires comprenant la disposition des mandrins (82) suivant un alignement vertical lors de la construction et du durcissement de l'élément composite, la formation d'un dégagement (102) dans au moins une face adjacente de chacun des mandrins intermédiaires afin que la pression de pose soit appliquée à la partie (10) de joint de poutrelle d'aile de chaque poutrelle pendant la pose, l'introduction d'une pression pneumatique plus importante dans les sacs pneumatiques des mandrins (82) du côté d'une poutrelle (44) recouvrant un dégagement.

7. Procédé de préparation d'une aile composite d'aéronef selon la revendication 5, ayant des étapes supplémentaires comprenant la disposition de plaques compensatrices (74a, 74b) entre les sacs pneumatiques (72a, 72b) et du revêtement pneumatique à chaque coin du mandrin (56) avant la pose du matériau de renforcement imprégné de résine.

8. Procédé de préparation d'une aile composite d'aéronef selon l'une quelconque des revendications 1 à 7, ayant des étapes supplémentaires comprenant la découpe des fibres déposées le long des bords antérieur et postérieur du mandrin en forme d'aile, l'introduction d'une pression pneumatique dans des sacs pneumatiques (72a, 72b) placés sur le mandrin afin que des plaques compensatrices (74a, 74b) soient repoussées contres les fibres déposées et soient appliquées contre la surface du moule, et le durcissement afin que les surfaces supérieure et inférieure de l'aile soient formées.

*Fig.2*

*Fig.1*

0 146 545

0 146 545

*Fig. 3*

*Fig. 7*      72b MOLD    OUTER SKIN WINDING

*Fig. 8*

CAUL PLATE

RUBBER SLEEVE

2

*Fig.5*

*Fig.6*

*Fig. 9*

*Fig. 10*

0 146 545

*Fig. 11*

*Fig. 4*

5

*Fig.12*

𝒸 BODY · SIDE OF BODY · 44 · 14

14 · FORWARD

WING BOX SEMISPAN PLAN VIEW

*Fig.13*

LIMIT BENDING MOMENT

SIDE OF BODY

0  0.1  0.2  0.3  0.4  0.5  0.6  0.7  0.8  0.9  1.0

*Fig.15*

34a
38a
36a

*Fig.14*

𝒸 BODY

15 · 41 · 42 · 34a

38a

15 · SIDE OF BODY · 36a

*Fig.16*

𝒸 BODY

10 · 10 · 10

44 · 44 · 44

10 · 10 · 10

0 146 545